# EUROPEAN PATENT APPLICATION

(11) **EP 4 852 073 A1**
(43) Date of publication of application: **09.12.2026**
(21) Application number: 25864520.9
(22) Date of filing: 04.06.2025
(51) Int. Cl.: H01M 4/13

(54) **ELECTRODE SHEET, ELECTRODE SHEET COATING APPARATUS AND COATING METHOD THEREFOR, AND BATTERY**

(30) Priority: 21.03.2025 CN 202510344375; 21.03.2025 CN 202520503405 U
(71) Applicant: Eve Power Co., Ltd., Jingmen, Hubei 448000 (CN)
(72) Inventor: YANG, Xin, Jingmen, Hubei 448000 (CN); ZENG, Hao, Jingmen, Hubei 448000 (CN)
(74) Representative: Nederlandsch Octrooibureau
(86) International application number: PCT/CN2025/099167
(87) International publication number: WO 2026/194067

(57) **Abstract**

An electrode plate, an electrode plate coating device, an electrode plate coating method, and a battery are provided. The electrode plate includes a current collector, a first electrode coating layer and a second electrode coating layer. The first electrode coating layer is disposed on at least a first surface of the current collector, the second electrode coating layer is stacked on a side of the first electrode coating layer away from the first surface of the current collector. A second peripheral edge of the second electrode coating layer extends beyond a first peripheral edge of the first electrode coating layer to form a filling and flatting portion, and a thickness of the filling and flatting portion is greater than a thickness of the first electrode coating layer.

## Description

This application claims priority to Chinese Patent Applications No. 202510344375.8 and 202520503405.0 filed with the China National Intellectual Property Administration on March 21, 2025, the entire contents of which are incorporated herein by reference.

### TECHNICAL FIELD

The present application relates to the technical field of lithium battery manufacturing, and in particular to an electrode plate, an electrode plate coating device, an electrode plate coating method, and a battery.

### BACKGROUND

In the production process of the lithium battery, the manufacture of the electrode plate is of crucial importance, and according to statistics, the quality of the lithium battery is approximately 70% dependent on the quality of the electrode plate. The manufacturing processes of the electrode plate of the lithium battery include sizing, coating, drying, and rolling. In the process of coating and producing the electrode plate, in order to prevent the binder from volatilizing quickly at a position close to the substrate during the drying process, resulting in a decrease in the amount of residual binder, so that the electrode plate is easy to fall off, a layered coating method is adopted in the related art. The most commonly used layered coating method is to coat two layers of slurry in a layered manner, in which the lower layer of slurry is widely coated, and the upper layer of slurry is narrowly coated.

### SUMMARY

However, this layered coating method may address the falling off of the electrode plate, but it is easy to cause poor appearance due to heavy segmentation traces of the upper and lower layers and excessive thickness difference of the thinned region, thereby reducing the battery production yield.

In a first aspect, the embodiments of the present application provide an electrode plate, including:
a current collector;
a first electrode coating layer disposed at least on a first surface of the current collector; and
a second electrode coating layer stacked on a side of the first electrode coating layer away from the first surface of the current collector, where a second peripheral edge of the second electrode coating layer extends beyond the first peripheral edge of the first electrode coating layer, and a protruding portion of the second peripheral edge encircles an outer periphery of the first electrode coating layer and forms a filling and flatting portion on the outer peripheral of the first electrode coating layer, and in a stacking direction of the first electrode coating layer and the second electrode coating layer, a thickness of the filling and flatting portion is greater than a thickness of the first electrode coating layer.

In a second aspect, an embodiment of the present application provides an electrode plate coating device, including:
a coating die head and at least two feeding flow channels, wherein a first discharge port and a second discharge port are provided on the coating die head and are configured to respectively spray slurry toward the current collector, the first discharge port is in communication with one of the feeding flow channels, and the second discharge port is in communication with another one of the feeding flow channels;
where the electrode plate coating device further includes:
a storage assembly disposed on the two feeding flow channels and configured to store a slurry after a demagnetization treatment;
a fine filtration assembly disposed on the two feeding flow channels, provided between the storage assembly and the coating die head, and configured to perform a fine filtration treatment on the slurry after the demagnetization treatment; and
an aggregating assembly disposed on the two feeding flow channels, provided between the fine filtration assembly and the coating die head, and configured to collect the slurry after the fine filtration treatment.

In a third aspect, an embodiment of the present application provides a coating method of an electrode plate, and the electrode plate coating method includes the following steps:
providing a current collector;
providing a first slurry and a second slurry;
coating a first slurry at least on a first surface of a current collector;
drying the current collector coated with the first slurry in a vacuum environment to form a first electrode coating layer on the current collector;
coating a second slurry on a second surface of the first electrode coating layer, where a coating amount of the second slurry is greater than a coating amount of the first slurry, so that a part of the second slurry flows to a first peripheral edge of the first electrode coating layer, and a filling and flatting portion is formed on a peripheral side of the first electrode coating layer;
drying the current collector coated with the second slurry in a vacuum environment to form a second electrode coating layer on the first electrode coating layer;
rolling the current collector laminated with the first electrode coating layer and the second electrode coating layer to form an electrode plate having a double-layer structure.

In a fourth aspect, the embodiments of the present application provide a battery including a cell.

### BENEFICIAL EFFECTS

In some embodiments of the present application, the electrode plate includes a current collector, a first electrode coating layer and a second electrode coating layer that are stacked. The first electrode coating layer is disposed at least on a first surface of the current collector. The second electrode coating layer is stacked on a side of the first electrode coating layer away from the first surface of the current collector. The width of the second electrode coating layer is greater than the width of the first electrode coating layer, so that the second peripheral edge of the second electrode coating layer extends beyond the first peripheral edge of the first electrode coating layer. Since the slurry for forming the second electrode coating layer is in a fluid state, during the coating process, the peripheral protruding portion of the second electrode coating layer will flow to the outer peripheral side of the first electrode coating layer, As a result, after the slurry is dried, the portion of the second electrode coating layer that extends beyond the first electrode coating layer will be around the outer peripheral side of the first electrode coating layer, thus forming a filling and flatting portion. The filling and flatting portion may fill the height difference between the first electrode coating layer and the current collector, thereby reducing segmentation traces at the edges of the first electrode coating layer and the second electrode coating layer. In addition, the thickness of the filling and flatting portion is greater than the thickness of the first electrode coating layer, so that the thickness difference on the outer peripheral side of the first electrode coating layer in the thinned region is also reduced, which may improve the poor appearance of the electrode plate and improve the production yield of the battery.

### BRIEF DESCRIPTION OF THE DRAWINGS

FIG. 1 is a schematic view of a structure of an electrode plate in the related art.
FIG. 2 is a schematic view of a structure of an electrode plate according to a possible implementation of the present application.
FIG. 3 is a simplified view of a structure of an electrode plate coating device according to a possible implementation of the present application.
FIG. 4 is a schematic view of a structure of a coating die head of an electrode plate according to a possible implementation of the present application.
FIG. 5 is an enlarged view of part A in FIG. 4.
FIG. 6 is a flowchart of an electrode plate coating method according to a possible implementation of the present application.

Description of reference numerals:
100, electrode plate; 1, current collector; 11, first surface; 2, first electrode coating layer; 21, second surface; 22, first peripheral edge; 3, second electrode coating layer; 31, second peripheral edge; 32, filling and flatting portion; 200, electrode plate coating device; 201, coating die head; 2011, first discharge port; 2012, second discharge port; 2013, first flow channel; 2014, second flow channel; 2015, first feeding port; 2016, second feeding port; 202, feeding flow channel; 203, storage assembly; 2031 storage tank; 204 fine filtration assembly; 2041, fine filtration part; 20411, first-stage filtration; 20412, second-stage filtration; 20413, third-stage filtration; 205, aggregating assembly; 2051, aggregating tank; 206, ingredient assembly; 2061, ingredient part; 20611, ingredient tank; 20612, stirring part; 207, demagnetization assembly; 2071, demagnetization part; 20711, first-stage demagnetization; 20712, second-stage demagnetization; 20713, third-stage demagnetization; 208, coarse filtration assembly; 2081, coarse filtration part; 209, feeding assembly; 2091, feeding pipeline.

### DETAILED DESCRIPTION

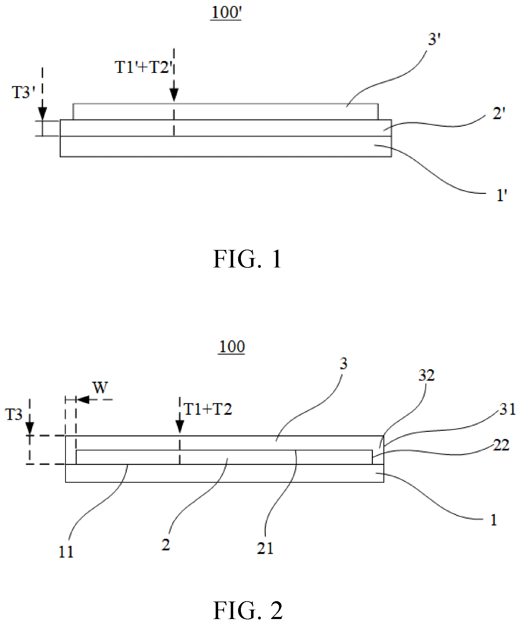

In a first aspect, an embodiment of the present application provides an electrode plate 100, referring to FIG. 2. The electrode plate 100 includes a current collector 1, a first electrode coating layer 2, and a second electrode coating layer 3. The first electrode coating layer 2 is at least disposed on a first surface 11 of the current collector 1. The second electrode coating layer 3 is stacked on a side of the first electrode coating layer 2 away from the first surface 11 of the current collector 1. A second peripheral edge 31 of the second electrode coating layer 3 extends beyond a first peripheral edge 22 of the first electrode coating layer 2, and a protruding portion of the second electrode coating layer 3 encircles an outer periphery of the first electrode coating layer 2 and forms a filling and flatting portion 32 on the outer peripheral of the first electrode coating layer 2. In a stacking direction of the first electrode coating layer 2 and the second electrode coating layer 3, a thickness of the filling and flatting portion 32 is greater than a thickness of the first electrode coating layer 2.

It can be known that the manufacturing process of the electrode plate 100 of the lithium battery includes sizing, coating, drying and rolling. The traditional coating process of the electrode plate 100 generally adopts single-layer coating, and when the coating is completed and the slurry is dried, since the binder (such as SBR) in the slurry volatilizes quickly at a position close to the current collector 1, the content of the binder of the electrode coating layer close to the current collector 1 is reduced, so that the peeling force between the dried electrode coating layer and the current collector 1 is reduced. During the assembly and charging and discharging of the battery, the coating of the electrode plate 100 is easy to peel off, which affects the performance of the battery, and even triggers the safety hazard due to the short circuit.

In order to increase the peeling force between the electrode coating layer and the current collector 1, in the related art, a layered coating method is proposed to form the coating layers of the electrode plate 100'. That is, referring to FIG. 1, a first electrode coating layer 2' and a second electrode coating layer 3' are sequentially coated on a current collector 1', and compared with the single-layer thick electrode coating layer, the phenomenon that the binder migrates to the surface during the drying process may be effectively alleviated, and the distribution uniformity of the binder is improved, which is beneficial to improve the peel strength and cycle stability of the battery. In addition, the first electrode coating layer 2' close to the current collector 1' is generally provided with a wider width, and the second electrode coating layer 3' away from the current collector 1' is provided with a narrower width. Although the layered coating may address the potential risk of coating peeling off from the electrode plate 100', since the first electrode coating layer 2' and the second electrode coating layer 3' have different widths, the dividing traces at the edge positions of the two electrode coating layers are obvious.

Moreover, at the edge position of the first electrode coating layer 2', there is no second electrode coating layer 3', that is, there is only one electrode coating layer at this position, thereby forming a thinned region. At the middle position of the current collector 1', the total thickness of the electrode coating layers is provided as the sum of the thickness T1' of the first electrode coating layer 2' and the thickness T2' of the second electrode coating layer 3', the thickness of the electrode coating layers at the thinned region is equivalent to the thickness T1' of the first electrode coating layer 2', the thickness difference of the electrode coating layers at the thinned region is equivalent to the thickness T2' of the second electrode coating layer 3', and the thickness difference of the electrode coating layers at the thinned region is large. In this way, the layered coating method provided by the related art easily causes poor appearance of heavy segmentation traces of the upper and lower layers and a large thickness difference of the thinned region, thereby reducing the production yield of the battery.

In some embodiments of the present application, referring to FIG. 2, the electrode plate 100 includes a current collector 1, a first electrode coating layer 2 and a second electrode coating layer 3 that are stacked. The first electrode coating layer 2 is disposed on a first surface 11 of the current collector 1. The second electrode coating layer 3 is stacked on a side of the first electrode coating layer 2 away from the first surface 11 of the current collector 1. The width of the second electrode coating layer 3 is greater than the width of the first electrode coating layer 2, so that the second peripheral edge 31 of the second electrode coating layer 3 extends beyond the first peripheral edge 22 of the first electrode coating layer 2. Since the slurry for forming the second electrode coating layer 3 is in a fluid state, during the coating process, the peripheral protruding portion of the second electrode coating layer 3 will flow to the outer peripheral side of the first electrode coating layer 2, As a result, after the slurry is dried, the portion of the second electrode coating layer 3 that extends beyond the first electrode coating layer 2 will be around the outer peripheral side of the first electrode coating layer 2, thus forming a filling and flatting portion 32. The filling and flatting portion 32 may fill the height difference between the first electrode coating layer 2 and the current collector 1, thereby reducing segmentation traces at the edges of the first electrode coating layer 2 and the second electrode coating layer 3.

In addition, in the coating process, the protruding portion of the peripheral side of the second electrode coating layer 3 will flow to the peripheral side of the first electrode coating layer 2, so that after the slurry is dried, the part of the second electrode coating layer 3 beyond the first electrode coating layer 2 will be disposed around the peripheral side of the first electrode coating layer 2, so as to form the filling and flatting portion 32; on the peripheral side of the first electrode coating layer 2, there is only one layer of electrode coating layer, that is, the filling and flatting portion 32, so that a thinning region is formed on the peripheral side of the first electrode coating layer 2. In the middle position of the current collector 1, the total thickness of the electrode coating layer is provided to be the sum of the thickness T1 of the first electrode coating layer 2 and the thickness T2 of the second electrode coating layer 3, and the thickness of the electrode coating layers in the thinning region is provided to be the thickness T3 of the filling and flatting portion 32, so that the thickness difference of the electrode coating layers in the thinning region is provided to be ΔT = (T1 + T2) - T3, and the thickness T3 of the filling and flatting portion 32 is provided to be greater than the thickness T1 of the first electrode coating layer 2, so that the thickness difference ΔT is less than the thickness T2 of the second electrode coating layer 3. Compared with the related art, the thickness difference of the electrode coating layers 3 in the thinning region in the present application is reduced, so that the thinning region is improved.

In this way, by providing the width of the second electrode coating layer 3 to be greater than the width of the first electrode coating layer 2, the second peripheral edge 31 of the second electrode coating layer 3 extends beyond the first peripheral edge 22 of the first electrode coating layer 2, and a protruding portion of the second electrode coating layer 3 encircles an outer periphery of the first electrode coating layer 2 and forms a filling and flatting portion 32 on the outer peripheral of the first electrode coating layer 2. In a stacking direction of the first electrode coating layer 2 and the second electrode coating layer 3, a thickness of the filling and flatting portion 32 is greater than a thickness of the first electrode coating layer 2. It is possible to improve the poor appearance caused by the obvious segmentation traces at the edges of the first electrode coating layer 2 and the second electrode coating layer 3, and caused by the electrode coating layers with an excessively large thickness difference in the thinned region, thereby improving the production yield of the battery.

In some embodiments, the total amount of the slurry of the second electrode coating layer 3 is greater than the total amount of the slurry of the first electrode coating layer 2; that is, in the convex coating process of the first electrode coating layer 2 and the second electrode coating layer 3, by providing the total amount of the slurry of the second electrode coating layer 3 to be greater than the total amount of the slurry of the first electrode coating layer 2, when the second electrode coating layer 3 is coated, sufficient slurry can flow to the outer peripheral side of the first electrode coating layer 2 while ensuring that the thickness of the second electrode coating layer 3 meets the requirements, and when the filling and flatting portion 32 is formed on the outer peripheral side of the first electrode coating layer 2, the thickness T3 of the filling and flatting portion 32 can be greater than the thickness T1 of the first electrode coating layer 2.

In addition, in some embodiments, in the stacking direction of the first electrode coating layer 2 and the second electrode coating layer 3, the thickness T3 of the filling and flatting portion 32 is equal to the sum of the thickness T1 of the first electrode coating layer 2 and the thickness T2 of the second electrode coating layer 3.

In some embodiments, the slurry of the first electrode coating layer 2 includes an active material, a conductive agent, and a binder. The slurry of the second electrode coating layer 3 includes an active material, a conductive agent, and a binder. The active material, the conductive agent, and the binder in the slurry of the first electrode coating layer 2 are proportioned at a first preset ratio. The active material, the conductive agent, and the binder in the slurry of the second electrode coating layer 3 are proportioned at a second preset ratio.

It can be known that, in order to ensure the cycle performance of the battery while improving the peeling force of the electrode coating layer, the content of the binder usually needs to be provided. The content of the binder is generally expressed in mass percentage (wt%), that is, the mass of the binder accounts for the total mass of the entire electrode slurry. In some embodiments, the mass percentage of the binder in the first electrode coating layer 2 is provided to X, and the mass percentage of the binder in the second electrode coating layer 3 is provided to Y, and X and Y satisfy: $0.2 ⩽ \frac{Y}{X} ⩽ 0.8$.

In some embodiments, the first electrode coating layer 2 is close to the current collector 1, and the second electrode coating layer 3 is away from the current collector 1. By increasing the content of the binder in the first electrode coating layer 2, the mass percentage of the binder in the first electrode coating layer 2 is provided to be large, which may improve the peeling force between the first electrode coating layer 2 and the current collector 1, thereby reducing the resistance of the electrode plate 100; and the mass percentage of the binder in the second electrode coating layer 3 is provided to be small, so that the second electrode coating layer 3 can be filled with more active materials and conductive agents, thereby improving the cycle performance of the battery.

Moreover, after the mass percentage of the binder in the first electrode coating layer 2 is increased, the range of the ratio of the mass percentage of the binder in the second electrode coating layer 3 to the mass percentage of the binder in the first electrode coating layer 2 is provided to be in the range of 0.2-0.8. When the ratio of the mass percentage of the binder in the second electrode coating layer 3 to the mass percentage of the binder in the first electrode coating layer 2 is greater than 0.8, the mass percentage of the binder in the first electrode coating layer 2 is approximately the same as the mass percentage of the binder in the second electrode coating layer 3, the increase of the content of the binder in the first electrode coating layer 2 is small, and the increase of the peeling force between the first electrode coating layer 2 and the current collector 1 is not obvious. When the ratio of the mass percentage of the binder in the second electrode coating layer 3 to the mass percentage of the binder in the first electrode coating layer 2 is greater than 0.2, the content of the binder in the first electrode coating layer 2 is too large, although the peeling force between the first electrode coating layer 2 and the current collector 1 can be greatly increased, the content of the active material and the conductive agent in the first electrode coating layer 2 is too small, which will affect the cycle performance of the battery.

A ratio of the mass percentage of the binder in the second electrode coating layer 3 to the mass percentage of the binder in the first electrode coating layer 2 is not specifically limited in the present application. The ratio of the mass percentage of the binder in the second electrode coating layer 3 to the mass percentage of the binder in the first electrode coating layer 2 may be provided to be 0.2, 0.3, 0.4, 0.5, 0.6, 0.7, or 0.8, or in a range of any two thereof.

Thicknesses of the first electrode coating layer 2 and the second electrode coating layer 3 are not specifically limited in the present application. Referring to FIG. 2, the thickness T1 of the first electrode coating layer 2 may be in a range of 0.5 µm to 5 µm, for example, may be 0.5 µm, 1 µm, 2 µm, 3 µm, 4 µm, or 5 µm, or in a range of any two thereof. Controlling the thickness T1 of the first electrode coating layer 2 in a suitable range not only facilitates the tight connection between the first electrode coating layer 2 and the current collector 1, ensures the safety performance of the battery, does not affect the energy density of the battery, and also facilitates the control cost.

Similarly, the thickness T2 of the second electrode coating layer 3 may be in a range of 1.5 µm to 8 µm, for example, may be 1.5 µm, 2 µm, 3 µm, 4 µm, 5 µm, 6 µm, 7 µm, or 8 µm, or in a range of any two thereof. Controlling the thickness T2 of the second electrode coating layer 3 in a suitable range not only facilitates the tight connection between the second electrode coating layer 3 and the current collector 1, ensures the safety performance of the battery, does not affect the energy density of the battery, and also facilitates the control cost.

In addition, the thicknesses of the first electrode coating layer 2 and the second electrode coating layer 3 may be the same or different. In some embodiments, the thicknesses of the first electrode coating layer 2 and the second electrode coating layer 3 are different, and when the thickness T1 of the first electrode coating layer 2 is different from the thickness T2 of the second electrode coating layer 3, the thickness T2 of the second electrode coating layer 3 may be greater than or less than the thickness T1 of the first electrode coating layer 2.

In other embodiments, the thickness T1 of the first electrode coating layer 2 is the same as the thickness T2 of the second electrode coating layer 3. It can be known that, when the first electrode coating layer 2 and the second electrode coating layer 3 are rolled after being dried, the rolling pressure applied to the second electrode coating layer 3 is greater than that applied to the first electrode coating layer 2. In order to ensure that the thickness T1 of the first electrode coating layer 2 is the same as the thickness T2 of the second electrode coating layer 3, the total amount of the slurry of the second electrode coating layer 3 needs to be greater than the total amount of the slurry of the first electrode coating layer 2, the content of the binder in the second electrode coating layer 3 is lower, and the content of the active material and the conductive agent is higher. Therefore, after rolling with a larger rolling pressure, the active material in the slurry of the second electrode coating layer 3 is more evenly distributed and has a higher density, so that the energy density of the second electrode coating layer 3 is greater, and the cycle performance of the battery is improved.

In some embodiments, in a direction away from the first peripheral edge 22 of the first electrode coating layer 2, a width of the filling and flatting portion 32 is provided to be W, where 0.1 mm ≤ W ≤ 0.5 mm. The arrangement of the filling and flatting portion 32 is to reduce the segmentation traces at the edges of the first electrode coating layer 2 and the second electrode coating layer 3. When the width W of the filling and flatting portion 32 is less than 0.1 mm, the filling and flatting portion 32 on the outer peripheral side of the first electrode coating layer 2 is too small, which is not conducive to reducing the segmentation traces at the edges of the first electrode coating layer 2 and the second electrode coating layer 3. When the width W of the filling and flatting portion 32 is greater than 0.5 mm, the filling and flatting portion 32 on the outer peripheral side of the first electrode coating layer 2 is too large, that is, too much slurry is accumulated on the outer peripheral side of the first electrode coating layer 2, which easily causes waste of the slurry. By providing the width W of the filling and flatting portion 32 to be in a range of 0.1 mm to 0.5 mm, the slurry can be saved on the basis of ensuring that the cutting trace effect at the edges of the first electrode coating layer 2 and the second electrode coating layer 3 is reduced.

A width of the filling and flatting portion 32 is not specifically limited in the present application, and may be 0.1 mm, 0.2 mm, 0.3 mm, 0.4 mm, or 0.5 mm, or may be in a range of any two thereof.

In some embodiments, in the stacking direction of the first electrode coating layer 2 and the second electrode coating layer 3, the thickness of the first electrode coating layer 2 is provided to be T1, the thickness of the second electrode coating layer 3 is provided to be T2, and the thickness of the filling and flatting portion 32 is provided to be T3, where 0 ≤ (T1 + T2) - T3 ≤ 9 µm. The arrangement of the filling and flatting portion 32 is to reduce the segmentation traces at the edges of the first electrode coating layer 2 and the second electrode coating layer 3. When the thickness difference of the electrode coating layers in the thinning region is less than 0 µm, the surface of the filling and flatting portion 32 exceeds the surface of the second electrode coating layer 3, that is, too much slurry is accumulated on the outer peripheral side of the first electrode coating layer 2, resulting in waste of the slurry. When the thickness difference of the electrode coating layer at the thinning region is greater than 9 µm, the thickness of the filling and flatting portion 32 is small, which is not conducive to reducing the segmentation traces at the edges of the first electrode coating layer 2 and the second electrode coating layer 3. By providing the thickness difference of the electrode coating layers in the thinned region to be in a range of 0 µm to 9 µm, the slurry can be saved on the basis of ensuring that the cutting trace effect at the edges of the first electrode coating layer 2 and the second electrode coating layer 3 is reduced.

The present application does not specifically limit the thickness difference of the electrode coating layer in the thinned region. The thickness difference of the electrode coating layer at the thinned region may be provided to be 0 µm, 1 µm, 2 µm, 3 µm, 4 µm, 5 µm, 6 µm, 7 µm, 8 µm, or 9 µm, or in a range of any two thereof.

A type of the electrode plate 100 is not specifically limited in the present application. The electrode plate 100 may be a positive electrode plate or a negative electrode plate. When the electrode plate 100 is provided as a positive electrode plate, the electrode plate 100 includes a positive current collector, a first positive electrode coating layer and a second positive electrode coating layer that are sequentially stacked, and the positive current collector is provided as an aluminum foil. When the electrode plate 100 is provided as a negative electrode plate, the electrode plate 100 includes a negative current collector, a first negative electrode coating layer and a second negative electrode coating layer that are sequentially stacked, and the negative current collector is provided as a copper foil.

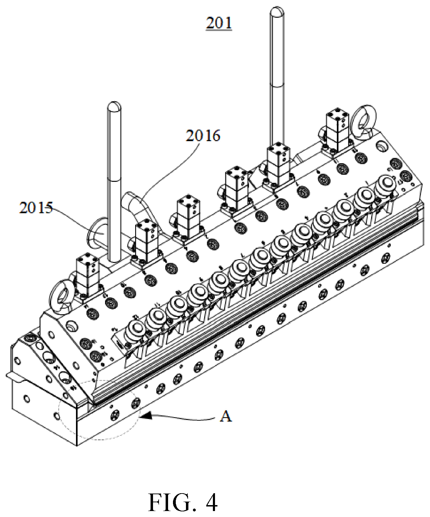

In a second aspect, based on the electrode plate 100, the present application further provides an electrode plate coating device 200. Referring to FIG. 4 to FIG. 6, the electrode plate coating device 200 includes a coating die head 201 and two feeding flow channels 202, a first discharge port 2011 and a second discharge port 2012 are formed on the coating die head 201 and are configured to respectively spray slurry toward the current collector 1. The first discharge port 2011 is in communication with one of the feeding flow channels 202, and the second discharge port 2012 is in communication with another one of the feeding flow channels 202. The electrode plate coating device 200 further includes a storage assembly 203, a fine filtration assembly 204, and an aggregating assembly 205; the storage assembly 203 is disposed on the two feeding flow channels 202 and is configured to store the slurry after the demagnetization treatment. The fine filtration assembly 204 is disposed on the two feeding flow channels 202 and is located between the storage assembly 203 and the coating die head 201 and is configured to perform the fine filtration treatment on the demagnetized slurry. and the aggregating assembly 205 is disposed on the two feeding flow channels 202 and is located between the fine filtration assembly 204 and the coating die head 201 and is configured to collect the fine filtered slurry.

In some embodiments of the present application, the electrode plate coating device 200 includes a coating die head 201 and two feeding flow channels 202, and the first discharge port 2011 and the second discharge port 2012 on the coating die head 201 are configured to spray slurry toward the current collector 1 respectively to form a first electrode coating layer 2 and a second electrode coating layer 3 on the current collector 1 respectively. The first discharge port 2011 and the second discharge port 2012 are respectively communicated with the two feeding flow channels 202. On each feeding flow channel 202, the slurry after the demagnetization treatment is stored in the storage assembly 203, and before the slurry is conveyed to the corresponding discharge port on the coating die head 201, the slurry is subjected to the fine filtration treatment by the fine filtration assembly 204, so as to remove particles in the slurry at the micron or even sub-micron level, which can significantly reduce the content of impurity, thereby improving the appearance defect of particle scratches in the coating layers of the electrode plate 100 in the layered thin coating process. At the same time, the slurry is discharged slowly after being subjected to fine filtration, and an aggregating assembly 205 is arranged between the fine filtration assembly 204 and the coating die head 201 to collect the slurry after the fine filtration treatment, so as to ensure the slurry feeding amount and the feeding speed into the module, thereby ensuring uniform coating of the slurry and improving the poor appearance of the coating layers of the electrode plate 100.

In some embodiments, referring to FIG. 4, the fine filtration assembly 204 includes two fine filtration parts 2041, the two fine filtration parts 2041 are separately disposed on the two feeding flow channels 202, and the fine filtration part 2041 includes a first-stage filtration 20411, a second-stage filtration 20412, and a third-stage filtration 20413. The first-stage filtration 20411 is disposed between the storage assembly 203 and the coating die head 201, and is configured to perform coarse filtration on the slurry after the demagnetization treatment. The second-stage filtration 20412 is disposed between the first-stage filtration 20411 and the coating die head 201, and is configured to perform medium filtration on the slurry after the coarse filtration. The third-stage filtration 20413 is disposed between the second-stage filtration 20412 and the coating die head 201, and is configured to perform a fine filtration treatment on the slurry after the medium filtration.

It can be known that the three-stage fine filtration refers to the gradual removal of impurities in liquid or gas through three filtration stages with different accuracies in the filtration process. This multi-stage filtration method can effectively improve the filtration efficiency and ensure the high purity and high quality of the final product. When the slurry passes through the first-stage filtration 20411, the slurry after the demagnetization treatment is subjected to coarse filtration, and generally, the first-stage filtration 20411 uses a coarser filter material (such as a filter screen, a filter cloth, or a large-pore filter element). In this way, larger particles and suspended matters can be removed, protecting subsequent filtration equipment and preventing clogging.

The slurry comes to the second-stage filtration 20412 after passing through the first-stage filtration 20411, and when the slurry passes through the second-stage filtration 20412, the slurry after the coarse filtration is subjected to a medium filtration treatment, and generally the second-stage filtration 20412 uses a filter element or membrane material with a medium pore size. In this way, it can remove medium-sized particles and micro particles, reduce the content of impurity, and prepare for the subsequent filtration stage.

The slurry comes to the third-stage filtration 20413 after passing through the second-stage filtration 20412, and when the slurry passes through the third-stage filtration 20413, the slurry after the medium filtration treatment is subjected to a fine filtration treatment, and generally, the third-stage filtration 20413 uses a high-precision filter element or membrane material (such as an ultrafiltration membrane and a nanofiltration membrane). In this way, it can remove extremely fine particles, colloids or other impurities, so as to meet the final requirement of high purity.

By adopting the three-stage fine filtration to filter the slurry, the particles of different sizes can be effectively removed by stepwise filtration, and the defects that may exist in single-stage filtration can be avoided. In addition, the accuracy of each stage of filtration can be adjusted to meet different application requirements. Moreover, after passing through the first-stage filtration 20411, the second-stage filtration 20412 and the third-stage filtration 20413 can be protected, and the risk of clogging and damage can be reduced. In addition, compared with directly using high-precision filtration, the three-stage fine filtration can reduce the overall operation cost.

It can be known that, after the slurry stored in the storage assembly 203 after the demagnetization treatment sequentially passes through the first-stage filtration 20411, the second-stage filtration 20412 and the third-stage filtration 20413, the discharging speed will be very slow, and if the slurry after being subjected to fine filtration directly enters the module, the slurry feeding amount and feeding speed into the module will be affected, thereby affecting the slurry discharge amount and uniformity out from the module, and further the phenomenon of uneven slurry coating will occur.

By providing an aggregating assembly 205 between the fine filtration assembly 204 and the coating die head 201 to collect the slurry after the fine filtration treatment, so as to ensure the slurry feeding amount and the feeding speed into the module, thereby ensuring uniform coating of the slurry and improving the poor appearance of the coating layers of the electrode plate 100.

In some embodiments, referring to FIG. 4, the storage assembly 203 includes two storage tanks 2031, the two storage tanks 2031 are disposed on the two feeding flow channels 202, respectively. The storage tank 2031 is configured to store the slurry after the demagnetization treatment on the corresponding feeding flow channel 202. The aggregating assembly 205 includes two aggregating tanks 2051, the two aggregating tanks 2051 are disposed on the two feeding flow channels 202, respectively. The aggregating tank 2051 is configured to collect the slurry after the filtration treatment on the corresponding feeding flow channel 202. The capacity of the aggregating tank 2051 is less than the capacity of the storage tank 2031.

That is to say, the slurry after the demagnetization treatment is respectively stored in two large-capacity storage tanks 2031, the slurry in the storage tank 2031 is subjected to the fine filtration treatment by the corresponding fine filtration part 2041, and then is collected in the small-capacity aggregating tank 2051 to prepare the slurry, and the slurry in the aggregating tank 2051 is then conveyed to the coating die head 201 and discharged from the corresponding discharge port. In this way, the slurry can be controlled to be uniformly discharged, thereby ensuring uniform slurry coating and improving the poor appearance of the coating layers of the electrode plate 100.

In some exemplary embodiments, the capacity of the storage tank 2031 is provided to be in a range of 30 L to 50 L. It can be known that the storage tank 2031 is used to store the slurry after the demagnetization treatment. When the capacity of the storage tank 2031 is less than 30 L, the capacity of the storage tank 2031 is too small to meet the production requirements. When the capacity of the storage tank 2031 is greater than 50 L, the capacity of the storage tank 2031 is too large to cause waste of resources. The capacity of the storage tank 2031 is provided to be in a range of 30 L to 50 L, which may avoid waste while ensuring the production requirements.

A capacity of the storage tank 2031 is not specifically limited in the present application. The capacity of the storage tank 2031 may be 30 L, 35 L, 40 L, 45 L, or 50 L, or may be in the range of any two thereof.

In an exemplary embodiment, the capacity of the aggregating tank 2051 is provided to be in a range of 5 L to 15 L. It can be known that the aggregating tank 2051 is configured to collect the slurry after the fine filtration treatment, and after the fine filtration treatment, the discharge speed of the slurry becomes slow, so the capacity requirement of the aggregating tank 2051 is low. When the capacity of the aggregating tank 2051 is greater than 15 L, the capacity of the aggregating tank 2051 is too large, which will cause resource waste. When the capacity of the aggregating tank 2051 is less than 5 L, the capacity of the aggregating tank 2051 is too small, which cannot meet the production requirements.

A capacity of the aggregating tank 2051 is not specifically limited in the present application. The capacity of the aggregating tank 2051 may be 5 L, 8 L, 10 L, 12 L, or 15 L, or may be in the range of any two thereof.

In some embodiments, referring to FIG. 4, the electrode plate coating device 200 further includes an ingredient assembly 206 and a demagnetization assembly 207. The ingredient assembly 206 is disposed on the two feeding flow channels 202 and is configured to provide two kinds of slurry with different proportions. The demagnetization assembly 207 is disposed on the two feeding flow channels 202 and is provided between the ingredient assembly 206 and the storage assembly 203 and is configured to perform a demagnetization treatment on the slurry respectively.

That is to say, two slurries with different ratios are arranged by the ingredient assembly 206, and the two slurries are respectively conveyed into the demagnetization assembly 207 for the demagnetization treatment. The two slurries after the demagnetization treatment are respectively conveyed into the two storage tanks 2031, the slurries in the two storage tanks 2031 are respectively subjected to a fine filtration treatment by the fine filtration parts 2041 on the corresponding feeding flow channels 202, and the slurries after the fine filtration treatment are collected into the corresponding aggregating tanks 2051 and uniformly conveyed to the coating die head 201.

Exemplarily, the ingredient assembly 206 includes two ingredient parts 2061, the two ingredient parts 2061 are respectively disposed on the two feeding flow channels 202, and the ingredient part 2061 includes an ingredient tank 20611 and a stirring part 20612; the stirring part 20612 is disposed in the ingredient tank 20611 and is configured to uniformly stir ingredients in the ingredient tank 20611 to form the slurry. That is, different proportions of ingredients are respectively placed in the two ingredient parts 2061, and the ingredients in the ingredient part 2061 are uniformly stirred by the stirring part 20612, thereby forming a slurry.

Exemplarily, the demagnetization assembly 207 includes two demagnetization parts 2071, the two demagnetization parts 2071 are arranged on the two feeding flow channels 202, respectively. The demagnetization part 2071 includes a first-stage demagnetization 20711, a second-stage demagnetization 20712 and a third-stage demagnetization 20713. The first-stage demagnetization 20711 is arranged between the ingredient assembly 206 and the storage assembly 203 and is configured to perform a first demagnetization treatment on the configured slurry. The second-stage demagnetization 20712 is arranged between the first-stage demagnetization 20711 and the storage assembly 203 and is configured to perform a second demagnetization treatment on the slurry after the first demagnetization treatment. The third-stage demagnetization 20713 is arranged between the second-stage demagnetization 20712 and the storage assembly 203 and is configured to perform a third demagnetization treatment on the slurry after the second demagnetization treatment.

It can be known that three-stage demagnetization means that magnetic particles or impurities in a liquid, a gas, or a solid are gradually removed through three different stages of demagnetization processes. The three-stage demagnetization generally adopts a magnetic field grading design from low strength to high strength to remove magnetic particles with different particle sizes and magnetic strengths step by step. The slurry is subjected to the first demagnetization treatment through the first-stage demagnetization 20711, and a demagnetization device (such as a permanent magnet rod or a magnetic grid) with a lower magnetic field strength is generally used to remove particles with a larger particle size and strong magnetism, protect subsequent equipment, and prevent clogging or damage.

The slurry after the first demagnetization treatment is subjected to the second demagnetization treatment by the second-stage demagnetization 20712, and a demagnetizer (such as a Gaussian magnetic rod or a magnetic filter) with a relatively high magnetic field strength is generally used to remove particles with medium particle size and medium magnetic properties, reduce the content of magnetic particles, and prepare for the fine demagnetization.

The slurry after the second demagnetization treatment is subjected to the third demagnetization treatment by the third-stage demagnetization 20713, and a precision demagnetization device (such as an electromagnetic filter or a superconducting magnetic separator) with ultra-high magnetic field strength is generally used to remove particles with small particle size and weak magnetism, so as to achieve the final high purity requirement.

The configured slurry is demagnetized by the three stages of demagnetizations, and magnetic particles with different particle sizes and magnetic strengths can be effectively removed by stepwise demagnetizations. Parameters of each stage of demagnetizations equipment can be adjusted according to material characteristics and requirements, so as to meet production requirements and have strong adaptability. Compared with the direct use of high magnetic field strength equipment, the three stages of demagnetization can reduce the overall operation cost. Moreover, the first-stage demagnetization 20711 can protect the second-stage demagnetization 20712 and the third-stage demagnetization 20713, thereby reducing the risk of wear and clogging.

Exemplarily, the electrode plate coating device 200 further includes a coarse filtration assembly 208, the coarse filtration assembly 208 includes two coarse filtration parts 2081, the two coarse filtration parts 2081 are respectively arranged on the two feeding flow channels 202, and the coarse filtration part 2081 is located between the demagnetization assembly 207 and the storage assembly 203, and is configured to perform coarse filter processing on the slurry after demagnetization processing.

That is to say, two slurries with different proportions are arranged by the ingredient assembly 206, and the two slurries are respectively conveyed into the two demagnetization parts 2071 for demagnetization treatment. The two slurries after the demagnetization treatment are subjected to coarse filtration treatment through the two coarse filtration parts 2081 respectively to remove larger particles and suspended matters. The two slurries after the demagnetization treatment are respectively conveyed into the two storage tanks 2031, the slurries in the two storage tanks 2031 are respectively subjected to a fine filtration treatment by the fine filtration parts 2041 on the corresponding feeding flow channels 202, and the slurries after the fine filtration treatment are collected into the corresponding aggregating tanks 2051 and uniformly conveyed to the coating die head 201. The slurry after the demagnetization treatment first undergoes coarse filtration through the coarse filtration part 2081, and then passes through the fine filtration part 2041 on the feeding flow channel 202 for fine filtration, which can not only improve the filtration effect, but also protect the subsequent fine filtration part 2041 by the coarse filtration part 2081.

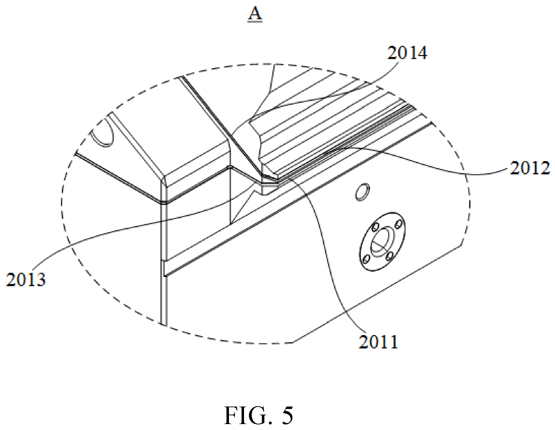

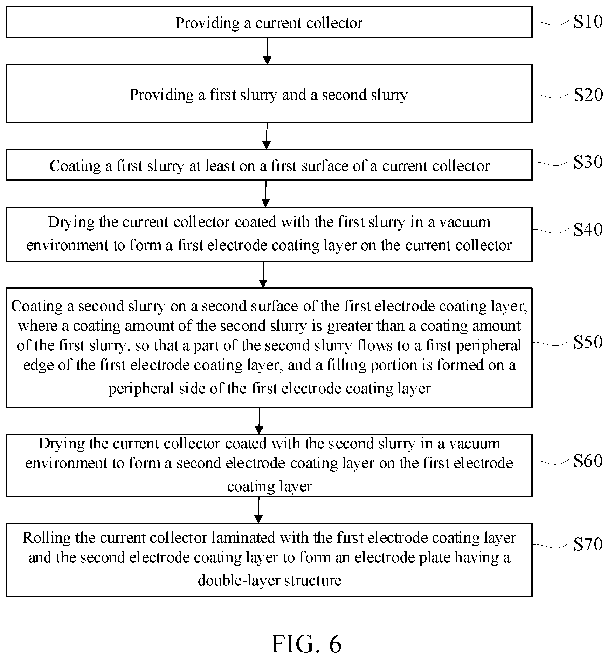

In some embodiments, referring to FIG. 5 and FIG. 6, an first flow channel 2013 and second flow channel 2014 that are independent of each other are formed in the coating die head 201. A first feeding port 2015 and a second feeding port 2016 are further formed on the coating die head 201. The first feeding port 2015 is communicated with the feeding flow channel 202, the second feeding port 2016 is communicated with the feeding flow channel 202, the first feeding port 2015 and the first discharge port 2011 are communicated with the first flow channel 2013, and the second feeding port 2016 and the second discharge port 2012 are communicated with the second flow channel 2014.

That is to say, two slurries with different ratios are arranged by the ingredient assembly 206, and the two slurries are respectively conveyed into the two demagnetization parts 2071 for demagnetization treatment. The two slurries after the demagnetization treatment are respectively subjected to coarse filtration treatment through the two coarse filtration parts 2081 to remove larger particles and suspended matters. The two slurries after the coarse filtration treatment are respectively conveyed into the two storage tanks 2031, and the slurries in the two storage tanks 2031 are respectively subjected to fine filtration treatment through the fine filtration parts 2041 on the corresponding feeding flow channels 202, and the slurries after the fine filtration treatment are collected into the corresponding aggregating tanks 2051 and uniformly conveyed to the coating die head 201. One slurry is conveyed from the first feeding port 2015 to the first discharge port 2011 via the first flow channel 2013, and coated on the current collector 1 to form the first electrode coating layer 2; the other slurry is conveyed from the second feeding port 2016 to the second discharge port 2012 via the second flow channel 2014, and coated on the current collector 1 to form the second electrode coating layer 3. Thus, layered coating of the electrode plate 100 is realized.

In some embodiments, referring to FIG. 4, the electrode plate coating device 200 further includes a feeding assembly 209, and the feeding assembly 209 includes two feeding pipelines 2091, where one feeding pipeline 2091 is at least disposed among the first discharge port 2011, the storage assembly 203, the fine filtration assembly 204, and the aggregating assembly 205 to form one of the feeding flow channels 202, and the other feeding pipeline 2091 is at least disposed among the second discharge port 2012, the storage assembly 203, the fine filtration assembly 204, and the aggregating assembly 205 to form another feeding flow channel 202.

That is to say, the first slurry and the second slurry are prepared respectively by the two ingredient parts 2061. The first slurry and the second slurry are sequentially subjected to demagnetization, coarse filtration, fine filtration and collection through the two feeding flow channels 202, and then are conveyed to the first discharge port 2011 and the second discharge port 2012. The first slurry is sprayed from the first discharge port 2011 to form the first electrode coating layer 2 on the current collector 1, and the second slurry is sprayed from the second discharge port 2012 to form the second electrode coating layer 3 on the current collector 1. In addition, by controlling the single discharge amount of the second discharge port 2012 to be greater than the single discharge amount of the first discharge port 2011, the slurry amount of the second electrode coating layer 3 is greater than the slurry amount of the first electrode coating layer 2, so that the slurry amount of the second electrode coating layer 3 can form the filling and flatting portion 32 on the peripheral side of the first electrode coating layer 2.

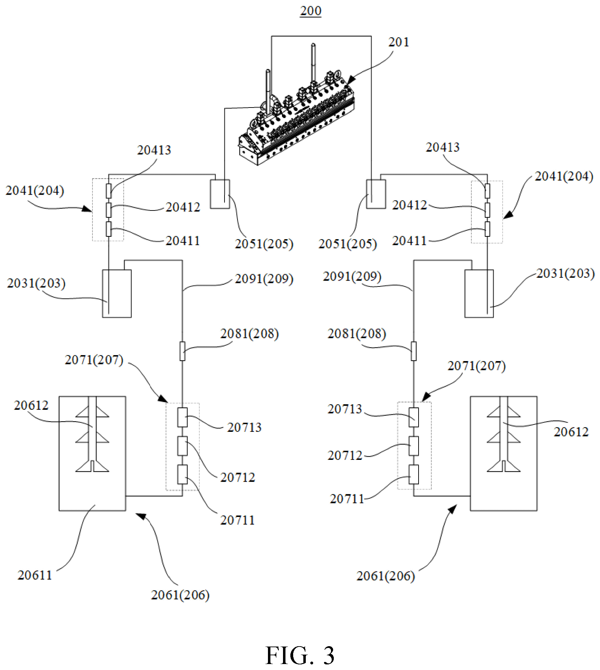

In a third aspect, based on the electrode plate 100, the embodiments of the present application further provide an electrode plate coating method. Referring to FIG. 3, FIG. 3 is a flowchart of an electrode plate coating method according to an embodiment of the present application. The coating method of the electrode plate includes the following steps S10 to S70.

At step S10, a current collector 1 is provided.

At step S20, a first slurry and a second slurry are provided.

At step S30, a first slurry is coated on a first surface 11 of at least one side of the current collector 1.

At step S40, the current collector 1 coated with the first slurry is dried in a vacuum environment to form a first electrode coating layer 2 on the current collector 1.

At step S50, a second slurry is coated on the second surface 21 of the first electrode coating layer 2, where a coating amount of the second slurry is greater than a coating amount of the first slurry, so that a part of the second slurry flows to the first peripheral edge 22 of the first electrode coating layer 2, and a filling and flatting portion 32 is formed on a peripheral side of the first electrode coating layer 2.

At step S60, the current collector 1 coated with the second slurry in a vacuum environment is dried to form a second electrode coating layer 3 on the first electrode coating layer 2.

At step S70, the current collector 1 on which the first electrode coating layer 2 and the second electrode coating layer 3 are stacked is rolled, to form an electrode plate 100 having a double-layer structure.

In the present application, the first slurry and the second slurry are sequentially coated on the current collector 1. The coating amount of the second slurry is provided to be greater than the coating amount of the first slurry, so that a part of the second slurry flows to the first peripheral edge 22 of the first electrode coating layer 2, and a filling and flatting portion 32 is formed on the peripheral side of the first electrode coating layer 2. The first slurry and the second slurry are respectively dried to form the first electrode coating layer 2 and the second electrode coating layer 3, and finally the first electrode coating layer 2 and the second electrode coating layer 3 are rolled to form the electrode plate 100 having a double-layer structure. The filling and flatting portion 32 may fill the height difference between the first electrode coating layer 2 and the current collector 1, thereby reducing the segmentation traces at the edges of the first electrode coating layer 2 and the edge of the second electrode coating layer 3. Moreover, the thickness T3 of the filling and flatting portion 32 is set to be greater than the thickness T1 of the first electrode coating layer 2, so that the thickness difference ΔT of the electrode coating layers in the thinning region is less than the thickness T2 of the second electrode coating layer 3. Compared with the related art, the thickness difference at the position of the thinning region in the present application is smaller, thereby improving the problem of larger thickness difference of the electrode coating layers in the thinning region in the related art.

In some embodiments, the step S20 of providing the first slurry and the second slurry includes the following steps S201 and S202.

At step S201, an active material, a conductive agent and a binder are mixed in a first preset ratio to form a first slurry.

At step S202, an active substance, a conductive agent and a binder are mixed in a second preset ratio to form a second slurry.

In the first preset ratio, the mass percentage of the binder is provided to X, and in the second preset ratio, the mass percentage of the binder is provided to Y, where X and Y satisfy $0.2 ⩽ \frac{Y}{X} ⩽ 0.8$.

In some embodiments, the slurry of the first electrode coating layer 2 includes an active material, a conductive agent, and a binder. The slurry of the second electrode coating layer 3 includes an active material, a conductive agent, and a binder. The active material, the conductive agent, and the binder in the slurry of the first electrode coating layer 2 are proportioned at a first preset ratio. The active material, the conductive agent, and the binder in the slurry of the second electrode coating layer 3 are proportioned at a second preset ratio.

In addition, the first electrode coating layer 2 is disposed close to the current collector 1, and the second electrode coating layer 3 is disposed away from the current collector 1. By increasing the content of the binder in the first electrode coating layer 2, the mass percentage of the binder in the first electrode coating layer 2 is provided to be large, which may improve the peeling force between the first electrode coating layer 2 and the current collector 1, thereby reducing the resistance of the electrode plate 100; and the mass percentage of the binder in the second electrode coating layer 3 is provided to be small, so that the second electrode coating layer 3 can be filled with more active materials and conductive agents, thereby improving the cycle performance of the battery.

Moreover, after the mass percentage of the binder in the first electrode coating layer 2 is increased, the range of the ratio of the mass percentage of the binder in the second electrode coating layer 3 to the mass percentage of the binder in the first electrode coating layer 2 is provided to be in the range of 0.2-0.8. When the ratio of the mass percentage of the binder in the second electrode coating layer 3 to the mass percentage of the binder in the first electrode coating layer 2 is greater than 0.8, the mass percentage of the binder in the first electrode coating layer 2 is approximately the same as the mass percentage of the binder in the second electrode coating layer 3, the increase of the content of the binder in the first electrode coating layer 2 is small, and the increase of the peeling force between the first electrode coating layer 2 and the current collector 1 is not obvious. When the ratio of the mass percentage of the binder in the second electrode coating layer 3 to the mass percentage of the binder in the first electrode coating layer 2 is greater than 0.2, the content of the binder in the first electrode coating layer 2 is too large, although the peeling force between the first electrode coating layer 2 and the current collector 1 can be greatly increased, the content of the active material and the conductive agent in the first electrode coating layer 2 is too small, which will affect the cycle performance of the battery.

In a third aspect, the embodiments of the present application further provide a battery. The battery includes the electrode plate 100, and it should be noted that the electrode plate 100 is provided as the electrode plate 100, that is, the electrode plate 100 has all technical features of the electrode plate 100, that is, the battery includes all embodiments of the electrode plate 100.

## Claims

1. An electrode plate (100), **characterized by** comprising:
a current collector (1);
a first electrode coating layer (2) disposed at least on a first surface (11) of the current collector (1); and
a second electrode coating layer (3) stacked on a side of the first electrode coating layer (2) away from the first surface (11) of the current collector (1), wherein a second peripheral edge (31) of the second electrode coating layer (3) extends beyond a first peripheral edge (22) of the first electrode coating layer (2), and a protruding portion of the second electrode coating layer (3) encircles an outer periphery of the first electrode coating layer (2) and forms a filling and flatting portion (32) on the outer peripheral of the first electrode coating layer (2), and in a stacking direction of the first electrode coating layer (2) and the second electrode coating layer (3), a thickness of the filling and flatting portion (32) is greater than a thickness of the first electrode coating layer (2).

2. The electrode plate (100) according to claim 1, **characterized in that** in the stacking direction of the first electrode coating layer (2) and the second electrode coating layer (3), a thickness of the filling and flatting portion (32) is equal to a sum of a thickness of the first electrode coating layer (2) and a thickness of the second electrode coating layer (3).

3. The electrode plate (100) according to claim 1 or 2, **characterized in that** a slurry of the first electrode coating layer (2) comprises an active material, a conductive agent and a binder;
a slurry of the second electrode coating layer (3) comprises an active material, a conductive agent, and a binder; and
a mass percentage of the binder in the first electrode coating layer (2) is provided to be X, and a mass percentage of the binder in the second electrode coating layer (3) is provided to be Y, wherein,.

4. The electrode plate (100) according to any one of claims 1 to 3, **characterized in that** in the stacking direction of the first electrode coating layer (2) and the second electrode coating layer (3), the first electrode coating layer (2) and the second electrode coating layer (3) have the same thickness.

5. The electrode plate (100) according to any one of claims 1 to 4, **characterized in that** in a direction away from the first peripheral edge (22) of the first electrode coating layer (2), a width of the filling and flatting portion (32) is provided to be W, and W satisfies: 0.1 mm ≤ W ≤ 0.5 mm.

6. The electrode plate (100) according to any one of claims 1 to 5, **characterized in that** in the stacking direction of the first electrode coating layer (2) and the second electrode coating layer (3), a thickness of the first electrode coating layer (2) is provided to be T1, a thickness of the second electrode coating layer (3) is provided to be T2, and a thickness of the filling and flatting portion (32) is provided to be T3, and T1, T2, and T3 satisfy: 0 ≤ (T1 + T2) - T3 ≤ 9 µm.

7. The electrode plate (100) according to any one of claims 2 to 6, **characterized in that** the current collector (1) is an aluminum foil or a copper foil.

8. An electrode plate coating device (200) according to any one claims 1 to 7, **characterized by** comprising a coating die head (201) and at least two feeding flow channels (202), wherein the coating die head (201) is provided with a first discharge port (2011) and a second discharge port (2012), which are configured to respectively spray slurry toward the current collector (1), wherein the first discharge port (2011) is in communication with one of the feeding flow channels (202), and the second discharge port (2012) is in communication with another one of the feeding flow channels (202); and
wherein the electrode plate coating device (200) further comprises:
a storage assembly (203) disposed on the two feeding flow channels (202) and configured to store a slurry after a demagnetization treatment;
a fine filtration assembly (204) disposed on the two feeding flow channels (202), provided between the storage assembly (203) and the coating die head (201), and configured to perform a fine filtration treatment on the slurry after the demagnetization treatment; and
an aggregating assembly (205) disposed on the two feeding flow channels (202), provided between the fine filtration assembly (204) and the coating die head (201), and configured to collect the slurry after the fine filtration treatment.

9. The electrode plate coating device (200) according to claim 8, **characterized in that** the fine filtration assembly (204) comprises two fine filtration parts (2041), and the two fine filtration parts (2041) are disposed on the two feeding flow channels (202), respectively, wherein each of the fine filtration parts (2041) comprises:
a first-stage filtration (20411) disposed between the storage assembly (203) and the coating die head (201) and configured to perform a coarse filtration treatment on the slurry after the demagnetization treatment;
a second-stage filtration (20412) disposed between the first-stage filtration (20411) and the coating die head (201) and configured to perform a medium filtration treatment on the slurry after the coarse filtration treatment; and
a third-stage filtration (20413) disposed between the second-stage filtration (20412) and the coating die head (201) and configured to perform the fine filtration treatment on the slurry after the medium filtration treatment.

10. The electrode plate coating device (200) according to claim 8 or 9, **characterized in that** the storage assembly (203) comprises two storage tanks (2031), the two storage tanks (2031) are disposed on the two feeding flow channels (202), respectively, and the storage tanks (2031) are each configured to store the slurry after the demagnetization treatment on a corresponding one of the feeding flow channels (202); and
the aggregating assembly (205) comprises two aggregating tanks (2051), the two aggregating tanks (2051) are disposed on the two feeding flow channels (202), respectively, and the aggregating tanks (2051) are each configured to collect the slurry after the fine filtration treatment on a corresponding one of the feeding flow channels (202);
wherein a capacity of one of the aggregating tanks (2051) is less than a capacity of one of the storage tanks (2031).

11. The electrode plate coating device (200) according to claim 10, **characterized in that** the capacity of one of the storage tanks (2031) is provided to be in a range of 30 L to 50 L; and
a capacity of the aggregating tank (2051) is provided to be in a range of 5 L to 15 L.

12. The electrode plate coating device (200) according to any one of claims 8 to 11, **characterized in that** the electrode plate coating device (200) further comprises:
an ingredient assembly (206) disposed on the two feeding flow channels (202) and configured to proportion two types of slurry having different mixing ratios; and
a demagnetization assembly (207) disposed on the two feeding flow channels (202), provided between the ingredient assembly (206) and the storage assembly (203), and configured to perform a demagnetization treatment on the slurry.

13. The electrode plate coating device (200) according to claim 12, **characterized in that** the ingredient assembly (206) comprises two ingredient parts (2061), and the two ingredient parts (2061) are disposed on the two feeding flow channels (202), respectively, wherein each of the ingredient parts (2061) comprises:
an ingredient tank (20611); and
a stirring part (20612), wherein the stirring part (20612) is disposed in the ingredient tank (20611) and is configured to uniformly stir ingredients in the ingredient tank (20611) to form the slurry.

14. The electrode plate coating device (200) according to claim 12 or 13, **characterized in that** the demagnetization assembly (207) comprises two demagnetization parts (2071), and the two demagnetization parts (2071) are disposed on the two feeding flow channels (202), respectively, wherein each of the demagnetization parts (2071) comprises:
a first-stage demagnetization (20711) disposed between the ingredient assembly (206) and the storage assembly (203) and configured to perform a first demagnetization treatment on the slurry after proportioning;
a second-stage demagnetization (20712) disposed between the first-stage demagnetization (20711) and the storage assembly (203) and configured to perform a second demagnetization treatment on the slurry after the first demagnetization treatment; and
a third-stage demagnetization (20713) disposed between the second-stage demagnetization (20712) and the storage assembly (203) and configured to perform a third demagnetization treatment on the slurry after the second demagnetization treatment.

15. The electrode plate coating device (200) according to any one of claims 12 to 14, **characterized in that** the electrode plate coating device (200) further comprises a coarse filtration assembly (208), the coarse filtration assembly (208) comprises two coarse filtration parts (2081), the two coarse filtration parts (2081) are disposed on the two feeding flow channels (202), respectively, and the coarse filtration parts (2081) are provided between the demagnetization assembly (207) and the storage assembly (203), and are configured to perform a coarse filter treatment on the slurry after the demagnetization treatment.

16. The electrode plate coating device (200) according to any one of claims 8 to 15, **characterized in that** the coating die head (201) is internally provided with a first flow channel (2013) and a second flow channel (2014) independent of each other, the coating die head (201) is further provided with a first feeding port (2015) and a second feeding port (2016), the first feeding port (2015) is in communication with the feeding flow channel (202), the second feeding port (2016) is in communication with the feeding flow channel (202), the first feeding port (2015) and the first discharge port (2011) are in communication with the first flow channel (2013), and the second feeding port (2016) and the second discharge port (2012) are in communication with the second flow channel (2014).

17. The electrode plate coating device (200) according to any one of claims 9 to 16, **characterized in that** the electrode plate coating device (200) further comprises a feeding assembly (209), and the feeding assembly (209) comprises two feeding pipelines (2091), wherein one of the feeding pipelines (2091) is disposed at least among the first discharge port (2011), the storage assembly (203), the fine filtration assembly (204) and the aggregating assembly (205) to form one of the feeding flow channels (202), and another one of the feeding pipelines (2091) is at least disposed among the second discharge port (2012), the storage assembly (203), the fine filtration assembly (204) and the aggregating assembly (205) to form another one of the feeding flow channels (202).

18. A electrode plate coating method (100) according to any one of claims 1 to 7, **characterized in that** the electrode plate coating method (100) comprises the following steps:
providing a current collector (1);
providing a first slurry and a second slurry;
coating the first slurry at least on the first surface (11) of the current collector (1);
drying the current collector (1) coated with the first slurry in a vacuum environment to form a first electrode coating layer (2) on the current collector (1).
coating the second slurry on the second surface (21) of the first electrode coating layer (2), wherein a coating amount of the second slurry is greater than a coating amount of the first slurry, so that a part of the second slurry flows to a first peripheral edge (22) of the first electrode coating layer (2), and a filling and flatting portion (32) is formed on a peripheral side of the first electrode coating layer (2);
drying the current collector (1) coated with the second slurry in a vacuum environment to form a second electrode coating layer (3) on the first electrode coating layer (2); and
rolling the current collector (1) stacked with the first electrode coating layer (2) and the second electrode coating layer (3) to form an electrode plate (100) having a double-layer structure.

19. The electrode plate coating method (100) according to claim 18, **characterized in that** the step of providing the first slurry and the second slurry comprises:
mixing an active material, a conductive agent and a binder in a first preset ratio to form the first slurry; and
mixing an active material, a conductive agent and a binder in a second preset ratio to form the second slurry;
wherein in the first preset ratio, a mass percentage of the binder is provided to be X, and in the second preset ratio, a mass percentage of the binder is provided to be Y, wherein,.

20. A battery, **characterized by** comprising the electrode plate (100) according to any one of claims 1 to 7.
